# EUROPEAN PATENT APPLICATION

(11) **EP 1 882 722 A1**
(43) Date of publication of application: **30.01.2008**
(21) Application number: 06076473.5
(22) Date of filing: 25.07.2006
(51) Int. Cl.: C09D 7/12, C09D 5/16

(54) **A coating composition**

(71) Applicant: Nederlandse Organisatie voor toegepast- natuurwetenschappelijk onderzoek TNO, 2628 VK The Hague (NL)
(72) Inventor: Rentrop, Cornelis Hermanus Arnoldus, 5616 AE Eindhoven (NL); Willemsen, Petrus Robertus, 1742 RN Schagen (NL); Hovens, Irene Antoinette Petra, 5913 CD Venlo (NL); Batenburg, Lawrence Fabian, 5652 EJ Eindhoven (NL)
(74) Representative: van Loon, C.J.J.

(57) **Abstract**

The invention provides a coating composition which comprises nanoparticles of a metal oxide, and nanoparticles and/or microparticles of a layered inorganic filler. In addition, the invention provides a process for preparing said coating composition. Moreover, the invention relates to the use of said coating in an antifouling paint or in a biomedical and hygienic application. Further, the invention provides an antifouling paint and a medical device comprising said coating composition.

## Description

The present invention relates a coating composition, a process for preparing said composition, the use of said composition in an antifouling agent or in a biomedical or hygienic coating application, and an antifouling paint comprising said composition.

Antifouling coatings are applied to prevent the build-up of bacterial slime films, algae, seaweed and other marine and freshwater life on the hull of a ship or other immersed surfaces. The growth of such organism affects their performance and induces material degradation, e.g. increased the corrosion rate. For ships fouling leads to increased fuel consumption. Additionally, it brings about a loss of speed and manoeuvrability. In order to deal with this problem some form of coating is required to protect such surfaces against fouling. For this purpose so-called antifouling coatings have been developed that need to be applied to such surfaces at regular intervals. Most of these antifouling coatings contain one or more chemical compounds which inhibit the growth of algae, seaweed and other marine life on immersed surfaces. The antifouling coatings that are mostly used today contain toxic ingredients based on heavy metals such as cuprous oxide, which ingredients are slowly released into the environment. Such release results in a steady accumulation of these toxic ingredients in the environment where they have harmful effects on wildlife and may damage human health too.

In order to deal with these environmental problems much research is nowadays carried out into the development of alternative antifouling coatings that are based on biologically active compounds that are much less harmful to the environment. In this respect reference can, for instance, be made to US 5,998,200 wherein antifouling coatings have been described which are in essence based on polyurethane matrices on which a biologically active enzyme has been affixed. Although such coatings are much more environmentally friendly than the conventional antifouling coatings, there is in terms of performance still substantial room for improvement. A drawback of these polyurethane-based coatings is that the enzyme is bonded in such a way to the active sites of the polyurethane matrix that the overall functionality and therefore effectiveness of the enzyme is substantially inhibited.

Object of the present invention is to provide coating compositions that can suitably be used in antifouling paints, which paints (not based on the release of active ingredients) are environmentally friendly and display excellent antifouling activity.

Surprisingly it has now been found that such coating compositions can be provided when use is made of nanoparticles of a metal oxide, and nanoparticles and/or microparticles of a layered inorganic filler.

Accordingly, the present invention relates to a coating composition which comprises nanoparticles of a metal oxide, and nanoparticles and/or microparticles of a layered inorganic filler.

Such a coating composition displays excellent antifouling properties when used alone or applied in an antifouling paint.

The coating composition according to the present invention comprises nanoparticles of a metal oxide. Said metal can suitably be selected from the group consisting of TiO₂, SiO₂, Fe₂O₃, Al₂O₃, MgO and ZrO₂. Preferably, said metal oxide is SiO₂.

Preferably, the nanoparticles of the metal oxide have been prepared by means of a sol-gel process. Sol-gel processes are as such well known. Reference can in this respect be made to C.J. Brinker, G.W. Scherer: Sol-gel Science: The Physics and Chemistry of Sol-Gel Processing (Academic Press, 1990), which is hereby incorporated by reference.

Preferably, the coating composition in accordance with the present invention comprises nanoparticles of the metal oxide, and nanoparticles of the layered inorganic filler.

More preferably, the coating composition in accordance with the present invention comprises nanoparticles of the metal oxide, nanoparticles of the layered inorganic filler, and in addition microparticles of the layered inorganic filler. Preferably, the microparticles are agglomerates derived from nanoparticles of a layered inorganic filler. More preferably, both the nanopartciles and the microparticles of the layered inorganic filler are derived from the same layered inorganic filler.

In yet another embodiment of the present invention, the coating composition comprises nanoparticles of the metal oxide and microparticles of a layered inorganic filler. In case the coating composition comprises both nanoparticles and microparticles of a layered inorganic filler, the nanoparticles and microparticles are preferably derived from the same type of layered inorganic filler. However, also microparticles of a different type of layered inorganic filler may be used.

The nanoparticles of the metal oxide have preferably an average particle size in the range of from 1-500 nm, more preferably an average particle size in the range of from 10-200 nm, as can, for instance, be determined on the surface of the coating composition by means of Atomic Force Microscopy and Confocal Microscopy.

Particular attractive layered inorganic fillers to be used in accordance with the present invention have a cation exchange capacity of 10-600 milliequivalents per 100 grams, preferably a cation exchange capacity of 10-100 milliequivalents per 100 grams.

Suitably, the layered inorganic filler to be used in accordance with the present invention has been subjected to a modification treatment with a modifier selected from the group consisting of aliphatic oligomers and aliphatic polymers, oligo- and polysiloxane, and perfluoroalkyl group(s)-containg compounds.

The modification treatment can suitably be an ion-exchange or covalent bond formation wherein covalent bonds are formed between the hydroxyl groups of the layered inorganic filler and functional groups of the modifier. Preferably, the modification treatment is an ion-exchange treatment. By modification of the layered inorganic filler the morphology of the nanostructure and microstructure can be controlled.

In a particularly attractive embodiment of the present invention the layered inorganic filler is subjected to a combination of an ion-exchange and a treatment wherein covalent bonds are formed. In such a combined treatment first an ion-exchange reaction is performed, and subsequently the hydroxyl groups are reacted with the modifier.

In accordance with the present invention a layered inorganic filler can be used. Suitable layered inorganic fillers to be used in accordance with the present invention are sepiolite, layered silicates and layered double hydroxides. The layered silicates and layered double hydroxides can be natural or synthetic materials.

Examples of suitable layered silicates include smectite-type clays and palygorskite-type clays. Preferred smectite-type clays include montmorillonite, saponite, hectorite, fluorohectorite, beidellite, nontronite, vermiculite, halloysite and stephanite. These materials impart very favorable mechanical properties and increase thermal stability to the coating composition.

The natural or synthetic layered double hydroxides to be used in accordance with the present invention are so-called anionic clays consisting of small crystalline sheets of dimensions of a few nanometers, between which anions are located. By these anions are meant anions other than hydroxyl groups. For a description of possible methods for preparing a synthetic layered double hydroxide reference can be made to US Patents Nos 3,539,306 and 3,650,704 which are hereby incorporated by reference.

Preferably, the layered double hydroxide has a large contact surface and an ion exchange capacity of 50 to 600 milliequivalents per 100 gram. Preferred layered double hydroxides include hydrotalcite and hydrotalcite-type materials, since these materials can be easily prepared synthetically, while the desired properties can eminently be controlled.

Very attractive layered double hydroxides are those that satisfy the formula (I):

[M₍₁₋ₓ₎²⁺ Mₓ³⁺ (OH)₂] [A_{x/y}^{y-}.n H₂O] (I),

wherein M²⁺ is a bivalent cation, M³⁺ is a trivalent cation, x is a number between 0.15 and 0.5, y is 1 or 2, n is a number from 1 to 10, and A is an anion selected from the group consisting of Cl, Br, NO₃-, SO₄²⁻ and CO₃²⁻.

Preferably, nanoparticles of the layered inorganic filler have an average particle size in the range of from 25-3000 nm, more preferably an average particle size in the range of from 25 - 750 nm, as can, for instance, be determined on the surface of the coating composition by means of Atomic Force Microscopy and Confocal Microscopy.

In a particularly attractive embodiment of the present invention, the coating composition comprises in addition microparticles of the layered inorganic filler, which microparticles are agglomerates derived from nanoparticles of the layered inorganic layer.

Such a coating composition displays even further improved antifouling properties. Without being bound to any particular theory, it is believed that such improved antifouling properties are due to a morphology that interferes in the attachment of biofouling organisms to the surface of a coating. The morphology is a combination of a microstructure and a nanostructure which makes the antifouling properties improve above the state of the art.

Preferably, the microparticles of the layered inorganic filler have an average particle size in the range of from 1 to 100 µm, more preferably they have an average particle size in the range of from 2 to 10 µm, as can, for instance, be determined on the surface of the coating composition by means of Atomic Force Microscopy and Confocal Microscopy.

Suitably, the nanoparticles of the metal oxide are present in an amount in the range of from 1 - 99 wt%, and the nanoparticles of the layered inorganic filler are present in an amount in the range of from 0.1 - 30 wt%, all based on total solids of the coating composition. Preferably, the nanoparticles of the metal oxide are present in an amount in the range of from 20 - 80 wt%, and the nanoparticles of the layered inorganic filler are present in an amount in the range of from 2.5 - 10 wt%, all based on total solids of the coating composition.

In case the microparticles of the layered inorganic filler are present, the nanoparticles of the metal oxide are present in an amount in the range of from 1 - 99 wt%, the nanoparticles of the layered inorganic filler are present in an amount in the range of from 0.1 - 30 wt%, and the microparticles of the layered inorganic filler are present in an amount in the range of from 1 -30 wt%, all based on total solids of the coating composition.

Preferably, the nanoparticles of the metal oxide are present in an amount in the range of from 20 - 80 wt%, the nanoparticles of the layered inorganic filler are present in an amount in the range of 2.5- 10 wt%, and the microparticles of the layered inorganic filler are present in an amount in the range of 2.5- 10 wt%, all based on total solids of the coating composition.

The present invention also relates to a process for preparing a coating composition according to the present invention, which process comprises the steps of:
(a) forming from a liquid solution of an organometallic precursor by means of a sol-gel process the nanoparticles of the metal oxide particles, which nanoparticles are dispersed in a liquid phase; and
(b) adding to the mixture of the nanoparticles and liquid phase obtained in step (a) nanoparticles and/or microparticles of a layered inorganic filler.

Preferably, to the mixture obtained in step (b) nanoparticles of the layered inorganic filler are added, and a part of said nanoparticles of the layered inorganic filler are allowed to agglomerate into microparticles of the layered inorganic filler.

In step (a) a sol-gel process is carried out which process is as such well-known, as indicated hereinabove. Suitable organometallic precursors to be used in step (a) include for instance, tetraethoxysilane, tetramethoxysilane, tetraethyl orthotitanate, methyltriethoxysilane, methyltrimethoxysilane, ethyltriethoxysilane, aluminum triethoxide, aluminium triiso butoxide and tetrachlorosilane.

The microparticles of the layered inorganic filler can be added separately to the mixture obtained in step (a) or to the mixture of nanoparticles of the metal oxide and the nanoparticles of the layered inorganic filler obtained in step (b). Preferably, the nanoparticles and the microparticles are dervied from the same type of layered inorganic filler. More preferably, the microparticles of the layered inorganic filler are obtained in step (b) by mixing the nanopartciles of the metal oxide with nanoparticles of the inorganic filler, and subsequently allowing the nanoparticles of the layered inorganic to agglomerate into microparticles of the layered inorganic filler. Such agglomeration can suitably be promoted by modification of the nanoparticles by a modifier that promotes agglomoration. However, also microparticles of a different type of layered inorganic filler can be used. The present invention also relates to the use of a coating composition according to the present invention in an antifouling paint. Such antifouling paints show improved antifouling properties.

In addition, the present invention also relates to the use of a coating composition according to the present invention in a biomedical application or a hygienic coating application. Suitable biomedial applications include implantable devices like pacemakers and stents, artificial body repair materials, chirurgical devices and instruments, lenses, inplants used for pharma, wound care applications and other devices used in medical environment (not excluding other applications known in the art), whereas suitable hygienic coating applications include antibacterial, antiprotein and/or antifungus surface coatings used in industrial and medical environment (not excluding other applications known in the art). The use of the present coating composition in a biomedical application results in the selective adherence and/or repulsion of biological compounds.
The use of the present composition in a hygenic application results in enhanced antibacterial, antifungus and antivirus properties and/or improved sterility.

Moreover, the present invention provides a medical device comprising the present coating composition.

Further, the present invention provides an antifouling paint comprising the coating composition according to the present invention. In such an antifouling paint the present coating composition can suitably be present in an amount in the range of from 5 to 100 wt%, and preferably in an amount in the range of from 50-100 wt%, based on total antifouling paint. The antifouling paint can also include other components such as solvents, dispersing agents, softener and leveling agents, which are usually present in an amount of less than 5 wt%, based on total antifouling paint.

The present invention will now be elucidated by means of the following Examples.

### Example 1

### Synthesis of nanoparticle filled sol-gel formulation

A sol-gel formulation was prepared by reaction of MTES (Methyl triethoxy silane) and TEOS (Tetraethoxy silane) with water. The hybrid formulation was made by hydrolysis of 80 mol% of tetraethoxysilane (TEOS) and 20 mol% of methyl triethoxysilane (MTES) with 1 equivalent of water. After hydrolysis the mixture was diluted in 2-propanol (IPA) to a weight percentage of 20. This formulation was also made in combination with water of pH 2.

### Modification of mineral clay nanoparticles

Modified clay particles were prepared by mixing 20 gram of a natural sepiolite (Pangel FF) that had a CEC of 14 meq/100g with 7 gram polysiloxane (Tegomer A-Si2322) in a mixture of ethanol and water. The sodium, which neutralized the natural surface charge of the clay, was replaced by the polysiloxane. After the reaction the mixture was washed with water.

### Coating application

A coating composition according to the present invention was prepared by adding 5 %wt of the modified clay particles to the sol-gel formulation. The modified clay particles were dispersed in the sol-gel formulation by dispersing for 15 minutes at 10.000 rpm. The formulation was sprayed on glass slides. The sol-gel coatings were heated for one to four hours at 130 °C.

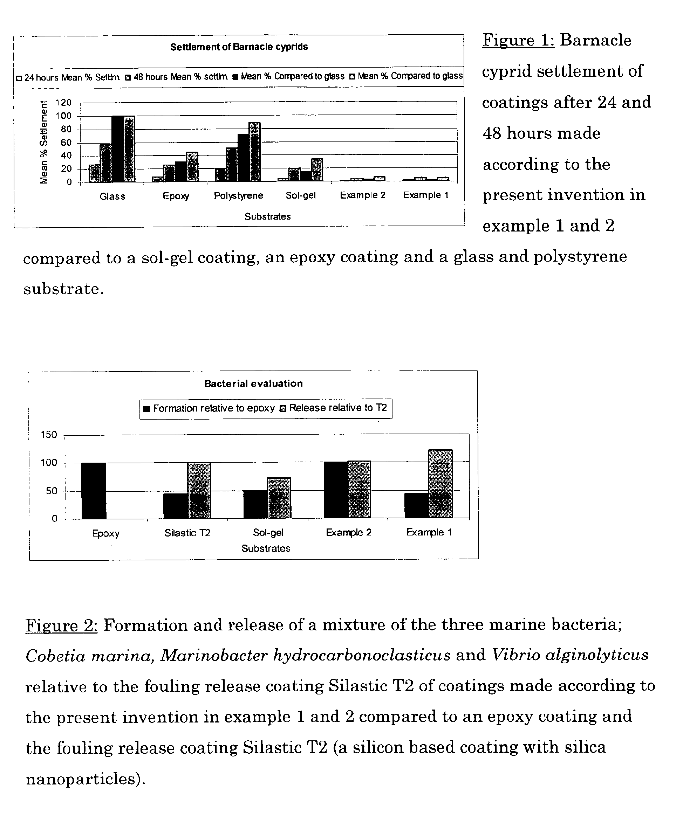

The coating composition so obtained comprised microparticles of the modified clay (layered inorganic filler) having an average particle size in the range of from 10 - 100 µm at a concentration of 4.5 %wt, nanoparticles of the modified clay having an average particle size in the range of from 100 - 1000 nm at a concentration of 0.5 %wt, and nanoparticles of the silica as obtained in the sol-gel process having an average particle size in the range of from 100 - 200 nm at a concentration of 50 % wt on solids. All these average particle sizes were determined at the surface of the coating composition by means of Atomic Force Microscopy and Confocal Microscopy.
In this way a morphology is generated which is composed of a microstructure and a nanostructure of the modified clay in combination with a nanostructure of the silica particles obtained in the sol-gel process.
When compared with a number of different coating compositions, namely a coating composition only containing the silica obtained in the sol-gel process, a glass-based coating composition, epoxy-based coating composition and polystyrene-based coating composition, the coating composition in accordance with the present invention displayed enhanced antifouling properties for in general barnacle cyprid settlement (see Figure 1) and an enhanced bacterial release (see Figure 2).

The coating composition in accordance with the present invention was found to inhibit settlement of barnacle cyprid larvae (see Figure 1). Furthermore, the removal under hydrodynamic shear of three marine bacteria; *Cobetia marina, Marinobacter hydrocarbonoclasticus* and *Vibrio alginolyticus* (see Figure 2) improved in comparison with the other hereinbefore mentioned coating compositions.

### Example 2

### Synthesis of nanoparticle filled sol-gel formulation

A sol-gel formulation was prepared by with MTES (Methyl triethoxy silane) and TEOS (Tetraethoxy silane). The hybrid formulation was made by hydrolysis of 80 mol% of tetraethoxysilane (TEOS) and 20 mol% of methyl triethoxysilane (MTES) with 1 equivalent of water. After hydrolysis the mixture was diluted in 2-propanol (IPA) to a weight percentage of 20. This formulation was also made in combination with water of pH 2.

### Modification of mineral clay nanoparticles

Modified clay particles were prepared by mixing 25 gram of a natural montmorrilonite that had a CEC of 95 meq/100g with 20 gram polysiloxane (Tegomer A-Si2122) in a mixture of ethanol and water. The sodium, which neutralized the natural surface charge of the clay, was replaced by the polysiloxane. After the reaction the mixture was washed with water.

A second modification was performed in toluene by mixing 5 gram of the polysiloxane modified montmorillonite with 1,5 ml of octyldimethylmethoxysilane at 100°C. After the reaction the modified clay is washed with toluene and dried under vacuum.

### Coating application

A coating composition according to the present invention was prepared by adding 2.5 %wt of the modified clay particles to the sol-gel formulation. The modified clay particles were dispersed in the sol-gel formulation by dispersing for 15 minutes at 10.000 rpm. The formulation was sprayed on glass slides. The sol-gel coatings were heated for one to four hours at 130 °C.

The coating composition so obtained comprised nanoparticles of the modified clay (layered inorganic filler) having an average particle size in the range of from 1 - 10 µm at a concentration of 1.5 %wt, nanoparticles of the modified clay having an average particle size in the range of 100 - 1000 nm at a concentration of 1 %wt, and nanoparticles of the silica as obtained in the sol-gel process having an average particle size in the range of 10 - 100 nm at a concentration of 50 % wt on solids. All these average particle sizes were determined at the surface of the coating composition by means of Atomic Force Microscopy and Confocal Microscopy.
In this way a morphology is generated which is composed of a microstructure and a nanostructure of the modified clay in combination with a nanostructure of the silica particles obtained in the sol-gel process.
When compared with a number of different coating compositions, namely a coating composition only containing the silica obtained in the sol-gel process, a glass-based coating composition, epoxy-based coating composition and polystyrene-based coating composition, the coating composition in accordance with the present invention displayed enhanced antifouling properties for in general barnacle cyprid settlement (see Figure 1) and an enhanced bacterial release (see Figure 2).
The coating composition in accordance with the present invention was found to inhibit settlement of barnacle cyprid larvae (see Figure 1). Furthermore, the removal under hydrodynamic shear of three marine bacteria; *Cobetia marina, Marinobacter hydrocarbonoclasticus* and *Vibrio alginolyticus* (see Figure 2) improved in comparison with the other hereinbefore mentioned coating compositions.

## Claims

1. A coating composition which comprises nanoparticles of a metal oxide, and nanoparticles and/or microparticles of a layered inorganic filler.

2. A composition according to claim 1, wherein the metal oxide is SiO₂.

3. A coating according to claim 1 or 2, wherein the nanoparticles of the metal oxide have been prepared by means of a sol-gel process.

4. A composition according to any one of claims 1-3 comprising nanoparticles of the metal oxide, and nanoparticles of the layered inorganic filler.

5. A composition according to claim 4 comprising in addition microparticles of the layered inorganic filler.

6. A composition according to claim 5, wherein the microparticles are agglomerates derived from nanoparticles of the layered inorganic filler.

7. A composition according to any one of claims 1-6, wherein the nanoparticles of the metal oxide have an average particle size in the range of from 1-500 nm.

8. A composition according to claim 7, wherein the nanoparticles of the metal oxide have an average particle size in the range of from 10-200 nm.

9. A composition according to any one of claims 1-8, wherein the layered inorganic filler has a cation exchange capacity of 10-600 milliequivalents per 100 grams.

10. A composition according to any one of claims 1-9, wherein the layered inorganic filler is a sepiolite, a layered silicate or a layered double hydroxide.

11. A composition according to claim 10, wherein the layered silicate comprises a smectitie or a palygorskite.

12. A composition according to claim 10, wherein the layered double hydroxide satisfies the formula (I):
LM₍₁₋ₓ)²⁺ Mₓ³⁺ (OH)₂] [A_{x/y}^{y-}.n H₂O] (I),
wherein M²⁺ is a bivalent cation, M³⁺ is a trivalent cation, x is a number between 0.15 and 0.5, y is 1 or 2, n is a number from 1 to 10, and A is an anion selected from the group consisting of Cl⁻, Br-, NO₃⁻, SO₄²⁻ and CO₃²⁻.

13. A composition according to any one of claims 1-12, wherein the nanoparticles of the layered inorganic filler have an average particle size in the range of from 25-3000 nm.

14. A composition according to claim 13, wherein the nanoparticles of the layered inorganic layer have an average particle size in the range of from 25 - 750 nm.

15. A composition according to any one of claims 1-14, wherein the microparticles of the layered inorganic filler have an average particle size in the range of from 1 to 100 µm.

16. A composition according to claim 15, wherein the microparticles of the layered inorganic filler have an average particle size in the range of from 2 to 10 µm.

17. A composition according to any one of claims 1-16, wherein the layered inorganic filler is modified with a modifier selected from the group consisting of aliphatic oligomers and aliphatic polymers, oligo- and polysiloxane, and perfluoroalkyl group(s)-containg compounds.

18. A composition according to any one of claims 1-17, wherein the nanoparticles of the metal oxide are present in an amount in the range of from 1 - 99 wt%, and the nanoparticles or microparticles of the layered inorganic filler are present in an amount in the range of from 0.1 - 30 wt%, all based on total solids of the coating composition.

19. A composition according to any one of claims 1-18, wherein the nanoparticles of the metal oxide are present in an amount in the range of from 1 - 99 wt%, the nanoparticles of the layered inorganic filler are present in an amount in the range of from 0.1-30 wt%, and the microparticles of the layered inorganic filler are present in an amount in the range of from 0.1 -30 wt%, all based on total solids of the coating composition.

20. A composition according to claim 19, wherein the nanoparticles of the metal oxide are present in an amount in the range of from 10 - 80 wt%, the nanoparticles of the layered inorganic filler are present in an amount in the range of 2.5- 10 wt%, and the microparticles of the layered inorganic filler are present in an amount in the range of 2.5- 10, all based on total solids of the coating composition.

21. A process for preparing a coating composition according to any one of claims 1-20 comprising the steps of:
(a) forming from a liquid solution of an organometallic precursor by means of a sol-gel process the nanoparticles of the metal oxide particles, which nanoparticles are dispersed in a liquid phase; and
(b) adding to the mixture of the nanoparticles and liquid phase obtained in step (a) nanoparticles and/or microparticles of a layered inorganic filler.

22. A process according to claim 21, wherein in the mixture obtained in step (b) a part of the nanoparticles of the layered inorganic filler are allowed to agglomerate into microparticles of the layered inorganic filler.

23. Use of a coating composition according to any one of claims 1-20 in an antifouling paint.

24. Use of a coating composition according to any one of claims 1-20 in a biomedical application or a hygienic coating application.

25. An antifouling paint comprising the coating composition according to any one of claims 1-20.

26. A medical device comprising the coating composition according to any one of claims 1-20.
